# EUROPEAN PATENT SPECIFICATION

(11) **EP 2 636 313 B1**
(45) Date of publication and mention of the grant of the patent: **22.08.2018**
(21) Application number: 12275022.7
(22) Date of filing: 08.03.2012
(51) Int. Cl.: A23D 9/013, A23D 9/04, C11C 3/08

(54) **Glyceride composition obtainable from shea oil**
Glyceridzusammensetzung aus Shea-Öl
Composition de glycéride pouvant être obtenue à partir d'huile de karité

(43) Date of publication of application: 11.09.2013
(73) Proprietor: IOI Lipid Enzymtec Sdn. Bhd., 81700 Pasir Gudang, Johor (MY)
(72) Inventor: Wong, Wai Seng, 81000 Kulai, Johor (MY); Thean, See Wee, 81750 Masai, Johor (MY); 't Zand, Imro, 81100 Johor Bahru (MY); Nordin, Suharul Pazillah Bin Che, 81700 Pasir Gudang, Johor (MY)
(74) Representative: Potter Clarkson LLP

(56) References cited:
- WO-A1-2010/053244
- US-A- 5 089 404
- US-A1- 2004 126 475
- "Bailey's industrial oil & fat products, vol. 3 - Edible oil and fat products: products and application technology ED - HUI Y H (ED)", 1 January 1996 (1996-01-01), BAILEY'S INDUSTRIAL OIL AND FAT PRODUCTS. EDIBLE OIL AND FAT PRODUCTS : PRODUCTS AND APPLICATION TECHNOLOGY, NEW YORK, NY : JOHN WILEY, US, PAGE(S) 382, XP002112226, ISBN: 978-0-471-59427-7 * the whole document *
- PEERS K E: "THE NON-GLYCERIDE SAPONIFIABLES OF SHEA BUTTER", JOURNAL OF THE SCIENCE OF FOOD AND AGRICULTURE, WILEY & SONS, CHICHESTER, GB, vol. 28, no. 11, 1 January 1977 (1977-01-01), pages 1000-1009, XP002030513, ISSN: 0022-5142

## Description

This invention relates to a glyceride composition and to a process for its production. In particular, the invention relates to a glyceride composition that is obtainable from shea olein. Glycerides are present in many food products and are the main components of edible fats and oils. Glycerides may be in the form of mono-, di- or tri- glycerides having one, two or three fatty acid acyl groups, respectively, bonded to a glycerol backbone. Triglycerides are the predominant type of glyceride in edible fats and oils.
Shea oil is used commercially to produce cocoa butter equivalents (CBEs). Shea oil is obtained from the shea butter tree *Butyrospermum parkii.* Shea oil is typically fractionated to produce shea stearin, a higher melting fraction used as a CBE, and a lower melting shea olein. The shea olein generally has a lower commercial value.
US 6,552,208 discloses the fractionation of vegetable oils, including shea butter, to produce a liquid (olein) fraction which is rich in unsaponifiable components. The composition of shea butter and its fractions is described in Alander and Andersson, The shea butter family - the complete emollient range for skincare formulations http://sheabuttermarket.com/documents/KARLSHAMNS.pdf.

Eze et al, Global Journal of Researches in Engineering, vol 10, issue 1, April 2010, pages 84 to 92 relates to the use of transesterified sheanut oil blends as biodiesel.
Some naturally occurring fats and oils have a high content of monounsaturated fatty acids, predominantly oleic acid. These are usually obtained from vegetable sources, such as olive, sunflower and canola. The oleic acid is present as bound acyl groups in glyceride molecules. Oils having a high oleic acid content, such as olive oil, are low in saturated fatty acids (SAFA) and are believed to have health benefits.

Edible glyceride oils having a high oleic acid content for use in food are desirably inexpensive, resistant to oxidation and low in SAFA. It is also advantageous for the glyceride oils to remain clear at low temperatures since a cloudy oil can be unattractive to consumers. It is also desirable to some consumers for the oil to be from a non-genetically modified source.

Ollivier et al, Food Chemistry, 97, (2006), 382-393 discloses the composition and characteristics of French virgin olive oil. Olive oils tend to be relatively expensive.

US 7,741,542 describes canola oil having an increased oleic acid content. The oil is produced from genetically modified plants and so is unacceptable to some consumers.

Siew Wai Lin et al, Journal of Oleo Science, 58, 11, 549-555, (2000) discloses the high oleic enhancement of palm olein via enzymatic esterification.

Liew Han-Fang, MSc Thesis, June 2007, FS 2007 10, Universiti Putra Malaysia, "Enzymatic Incorporation of Oleic Acid into Refined Bleached and Deodorised Palm Olein" relates to an investigation on the performance of lipases in obtaining a high oleic content cooking oil.

WO 2010/053244 relates to cocoa butter equivalents produced by an enzymatic interesterification process. The cocoa butter equivalents have a high SOS content.

US 5,089,404 describes a process for the transesterification of fat and oil. The process uses as substrates the fat or oil and one or more compounds selected from fatty acids, fatty acid esters and other fats and oils and is carried out in the presence of a lipase and a monohydric lower alcohol.

Bailey's industrial oil & fat products, vol. 3 - Edible oil and fat products: products and application technology, Ed. Hui, 1 January 1996, page 382 gives the typical fatty acid compositions and triglyceride profiles for selected cocoa butter equivalent feedstocks.

Peers, J. Sci. Fd. Agric., 1977, 28, 1000-1009 describes the non-glyceride saponifiables of shea butter and discloses a fatty acid composition for shea butter.

US 2004/0126475 relates to a fat composition that is suitable for roll-in applications. The fat gives β-form crystals having a double chain length structure when the fat is completely melted at 70°C, and subsequently held at 0°C for 30 minutes and then at 5°C for 7 days.

There remains a need for glyceride compositions having a relatively high oleic acid content that have one or more of the following advantages of being inexpensive, resistant to oxidation, low in SAFA, clear when stored at low temperatures and obtainable from a non-genetically modified source.

According to the present invention, there is provided a glyceride composition obtainable from shea olein comprising at least 75 % by weight triglycerides and from 5 to 25 % by weight diglycerides based on the total weight of the composition, and having an oleic acid content of at least 65 % by weight and a combined stearic acid plus palmitic acid content of from 10 to 20 % by weight based on the total C12 to C20 fatty acids present in the glycerides (i.e., the total mono-, di- and/or tri- glycerides), said oleic acid, stearic acid and palmitic acid being present as acyl groups in mono-, di- or tri- glycerides.

In another aspect, the invention provides a process for producing a glyceride composition having an oleic acid content of at least 65% by weight, based on the total C12 to C20 fatty acids present in the glycerides, comprising reacting a fractionated oil or fat derived from shea oil, having an oleic acid content present as acyl groups of from 45 to 60% by weight based on the total C12 to C20 fatty acids present, with free oleic acid in the presence of a 1,3-specific lipase, wherein the fractionated oil or fat derived from shea oil is shea olein.
In a further aspect, the invention provides the use of a glyceride composition of the invention as an edible oil in a food product or in the preparation of a food product.
Surprisingly, it has been found to be possible to produce a glyceride composition having a high oleic acid content from relatively inexpensive starting materials derived from shea oil. The glyceride composition has an oleic acid content that is comparable to that of olive oil but can be produced at a much lower cost.
The glyceride compositions of the invention are edible and non-toxic and may be used in food applications. For example, the compositions may be used as cooking or frying oils or as components of food products in their own right, such as salad oils, mayonnaise and salad dressings.
The glyceride composition of the invention comprises monoglycerides, diglycerides and triglycerides having fatty acid acyl groups. The term fatty acid, as used herein, refers to straight chain saturated or unsaturated (including mono- and poly- unsaturated) carboxylic acids having from 12 to 20 carbon atoms.
The glyceride composition comprises from 5 to 25 % by weight diglycerides based on the total weight of the composition. Preferably, the diglyceride content is from 6 to 15 % by weight, such as from 7 to 12 % by weight based on the total weight of the composition. Glyceride compositions containing these relatively high levels of diglycerides may be produced enzymatically.
Triglycerides are the predominant glyceride present in the product. The triglyceride content is at least 75 % by weight, preferably more than 80 % by weight, more preferably from 85 to 95% by weight based in the total weight of the composition.

The compositions of the invention may also comprise smaller amounts of monoglycerides. Preferably, the composition comprises less than 5% by weight of monoglycerides based on the total weight of the composition.

The glyceride content of the glyceride composition can be determined by methods well known to those skilled in the art such as GC.

The weight ratio of palmitic acid to stearic acid present as acyl groups in the glycerides contained in the glyceride composition of the invention is preferably at least 1:2.5, more preferably at least 1:4, even more preferably at least 1:5. The levels of these and other fatty acids present in the compositions of the invention can be determined by methods well-known to those skilled in the art such as GC-FAME.

The glyceride composition preferably comprises oleic acid, present as acyl groups, in an amount of at least 68 % by weight or at least 70 % by weight, such as from 70 to 80 % by weight, or from 70 to 75 % by weight, based on the total C12 to C20 fatty acids present in the glycerides.

The glyceride composition preferably comprises from 0.5 to 6 % by weight, more preferably from 1 to 4 % by weight, of palmitic acid, present as acyl groups, based on the total C12 to C20 fatty acids present in the glycerides.

The content of stearic acid present as acyl groups in the glycerides is preferably from 5 to 20 % by weight, more preferably from 8 to 13 % by weight, based on the total C12 to C20 fatty acids present in the glycerides.

The combined amount of stearic acid and palmitic acid present as acyl groups in the glycerides is from 10 to 20 % by weight, preferably from 11 to 15 % by weight, based on the total C12 to C20 fatty acids present in the glycerides.

The content of linolenic acids (C18:3) present as acyl groups in the glycerides is preferably less than 0.5 % by weight, based on the total C12 to C20 fatty acids present in the glycerides.

The content of linoleic acid present as acyl groups in the glycerides is preferably at least 5 % by weight, such as from 8 to 15 % by weight, based on the total C12 to C20 fatty acids present in the glycerides.

The free fatty acid content (i.e., fatty acids not bound as part of glycerides) of the glyceride compositions of the invention is typically less than 5 % by weight, more preferably less than 3 % by weight, such as less than 1.5 % by weight, based on the total weight of the composition.

The glyceride composition of the invention preferably has a weight ratio of diglycerides to free fatty acids of at least 4:1, more preferably at least 6:1.

The composition preferably has a SAFA content of less than 19 % by weight, more preferably less than 18% by weight, such as from 10 to 16 % by weight. The SAFA content of the glyceride compositions of the invention is desirably lower than in the shea oil or fraction thereof that is used to produce the glyceride composition. SAFA is based on the total fatty acids present in the glycerides.

Preferably, the composition has an OOO (triolein) content of from 25 to 70 % by weight, a SOO (i.e., having S at the 1- position and O at the 2 and 3 positions in the glyceride) content of from 10 to 35 % by weight, an SOL (i.e., having S at the 1- position, O at the 2- position and L at the 3- position in the glyceride) content of from 1 to 20 % (more preferably 2 to 5 %) by weight and an SOS (i.e., having S at the 1- and 3- positions and O at the 2 position in the glyceride) content of from 0.2 to 10 % (more preferably 0.2 to 2 %) by weight, where S represents C16 or C18 saturated fatty acids, L represents linoleic acid and O represents oleic acid, and the percentages are based on total triglycerides.

The glyceride composition preferably has a cloud point below 3 °C, preferably less than 2 °C, more preferably less than 1 °C. Cloud point is the temperature at which the oil becomes cloudy and may be determined by, for example AOCS Cc 6-25. A low cloud point means that the glyceride composition remains clear on storage at low temperatures.

The glyceride composition of the invention is especially useful for food applications where the oil or foodstuff is kept at temperatures (typical for a refrigerator) of from 4 °C to 7 °C, since no crystallization of the glyceride compositions of the invention occurs during storage at these temperatures.

The composition preferably has an N-value (solid fat content or SFC) at 10 °C of less than 10, more preferably less than 5, and at 5 °C of less than 10, more preferably from 5 to 10, determined by NMR on the composition stabilised for 16 hours at 0 °C. The N-value at 0 °C is preferably less than 10, more preferably from 5 to 10, determined by the same method.

The composition preferably has an iodine value of from 80 to 90. Iodine value is determined by AOCS Cd 1d-92.

The composition comprises minor amounts (typically up to 9 % by weight, for example from 2 to 8 % by weight, based on the total weight of the composition) of unsaponifiable compounds as found in shea oil, including sterols and sterol esters such as 4,4-dimethylsterols and triterpene alcohols such as beta-amyrin, lupeol, parkeol, and butyrospermol.

The glyceride composition is preferably prepared by enzymatic rearrangement, for example of a triglyceride in the presence of oleic acid. The composition may be the direct product obtained after enzymatic rearrangement, or it may be a fraction of that product or a blend of the product or fraction with one or more other fats or oils, such as high oleic sunflower oil, rapeseed oil, soybean oil, sunflower oil, palm oil or fractions of palm oil, micronized fat particles (for example as disclosed in WO 2011/134627) and mixtures thereof.

The glyceride composition of the invention may have an increased oxidative stability.

Preferably, the glyceride composition comprises at least 65 % by weight of the composition of a product obtainable by reacting a fractionated oil or fat derived from shea oil, having an oleic acid content present as acyl groups of from 45 to 60% based on the total C12 to C20 fatty acids present as acyl groups, with free oleic acid in the presence of a 1,3-specific lipase.

One preferred glyceride composition of the invention comprises at least 75% by weight triglycerides and from 5 to 25% by weight diglycerides based on the total weight of the composition, wherein the glyceride composition comprises at least 65% by weight of oleic acid and from 10 to 20% by weight of combined palmitic acid and stearic acid based on the total C12 to C20 fatty acids present in the glycerides, said oleic acid and palmitic acid being present as acyl groups in mono-, di- or tri- glycerides, wherein the weight ratio of palmitic acid to stearic acid present as acyl groups in the glycerides is at least 1:4, the content of stearic acid present as acyl groups in the glycerides is from 5 to 20 % by weight based on the total C12 to C20 fatty acids present in the glycerides, the content of palmitic acid present as acyl groups in the glycerides is from 1 to 4 % by weight based on the total C12 to C20 fatty acids present in the glycerides, the content of linolenic acids present as acyl groups in the glycerides is less than 0.5 % by weight based on the total C12 to C20 fatty acids present in the glycerides, the content of linoleic acid present as acyl groups in the glycerides is from 8 to 15 % by weight based on the total C12 to C20 fatty acids present in the glycerides, and the composition has an OOO content of from 25 to 70 % by weight based on total triglycerides, a SOO content of from 10 to 35 % by weight based on total triglycerides, an SOL content of from 2 to 8 % by weight based on total triglycerides and an SOS content of from 0.2 to 2 % by weight based on total triglycerides, where S represents C16 or C18 saturated fatty acids, L represents linoleic acid and O represents oleic acid.

Another preferred glyceride composition of the invention comprises at least 75% by weight triglycerides and from 5 to 25% by weight diglycerides based on the total weight of the composition, wherein the glyceride composition comprises at least 65% by weight of oleic acid and from 10 to 20% by weight of combined palmitic acid and stearic acid weight based on the total C12 to C20 fatty acids present in the glycerides, said oleic acid and palmitic acid being present as acyl groups in mono-, di- or tri- glycerides, wherein the weight ratio of palmitic acid to stearic acid present as acyl groups in the glycerides is at least 1:4, the content of stearic acid present as acyl groups in the glycerides is from 5 to 20 % by weight based on the total C12 to C20 fatty acids present in the glycerides, the content of palmitic acid present as acyl groups in the glycerides is from 1 to 4 % by weight based on the total C12 to C20 fatty acids present in the glycerides, the content of linolenic acids present as acyl groups in the glycerides is less than 0.5 % by weight based on the total C12 to C20 fatty acids present in the glycerides, the content of linoleic acid present as acyl groups in the glycerides is from 8 to 15 % by weight based on the total C12 to C20 fatty acids present in the glycerides, and the composition has an N-value at 10 °C of less than 5, at 5 °C of 5 to 10 and at 0 °C of 5 to 10, determined by NMR on the composition stabilised for 16 hours at 0 °C and an iodine value of from 80 to 90.
The glyceride composition of the invention may comprise or may consist of the product obtainable by the process of the invention.

The process of the invention comprises reacting a fractionated oil or fat derived from shea oil, having an oleic acid content present as acyl groups of from 45 to 60% by weight based on the total C12 to C20 fatty acids present in the glycerides, with free oleic acid in the presence of a 1,3-specific lipase, wherein the fractionated oil or fat derived from shea oil is shea olein. The process may produce a glyceride composition having an oleic acid content of at least 65% by weight based on the total C12 to C20 fatty acids present in the glycerides, preferably a glyceride composition of the invention.
Preferably the reaction of the fractionated oil or fat with oleic acid is carried out at a temperature of above 30 °C, more preferably in the range of from 65 °C to 80 °C.
The process of the invention comprises reacting a fractionated oil or fat, having an oleic acid content present as acyl groups of from 45 to 60% by weight based on the total C12 to C20 fatty acids present in the glycerides, with free oleic acid in the presence of a 1,3-specific lipase, wherein the fractionated oil or fat derived from shea oil is shea olein. By free oleic acid, it is meant that the oleic acid is not chemically bound as part of a glyceride.
The process of the invention is preferably carried out under an inert atmosphere, such as of nitrogen.
The reaction of the fractionated oil or fat with oleic acid is preferably carried out in the presence of from 0.01 to 0.5 % by weight of water.

In the process of the invention, the weight ratio of the fractionated oil or fat to oleic acid is preferably less than 1:1, more preferably in the range of from 1:1 to 1:3.
The fractionated oil or fat is an oil or fat that has been produced by a process that comprises a step of fractionation. Fractionation of fats and oils into higher and lower melting fractions is a technique that is well-known to those skilled in the art. The higher melting fraction is sometimes termed an olein and the lower melting fraction is sometimes called a stearin. Fractionation may be carried out in the presence of a solvent (wet) or without a solvent (dry).
Typically, the fractionated oil or fat has a diglyceride content of less than 10 % by weight, such from 5 to 10% by weight. The diglyceride content of the fractionated oil or fat may be lower than the diglyceride content of the glyceride composition produced as the product of the invention. The fractionated oil or fat preferably has an oleic acid content of less than 65 % by weight, such as from 45 to 60 % by weight, weight based on the total C12 to C20 fatty acids present in the glycerides. The fractionated oil or fat preferably has a SOO (i.e., 2,3-dioleoyl 1-stearoyl or palmitoyl glyceride) content in the range of from 40 to 75 % by weight based on total triglycerides. Alternatively or additionally, the SOS (i.e., 2-oleoyl 1,3-distearoyl or dipalmitoyl glyceride) content is preferably in the range of from 0.5 to 5 % by weight based on total triglycerides.
The fractionated oil or fat used in the process of the invention is shea olein. The shea olein may have an IV of between 55 and 75, more preferably from 60 to 70. Typically, the shea olein has a diglyceride content of less than 10 % by weight, such from 5 to 10% by weight based on the total weight of the composition. The diglyceride content of the shea olein may be lower than the diglyceride content of the glyceride composition produced as the product of the invention. The shea olein preferably has an oleic acid content of less than 65 % by weight, such as from 40 to 60 % by weight based on the total C12 to C20 fatty acids present in the glycerides. The lipase that is used in the process is a 1,3- specific lipase. By this it is meant that the lipase catalyses the reaction at the 1 and 3 positions on the glyceride at a greater rate than the reaction at the 2 position. A preferred lipase is the lipase from *Rhizopus oryzae.* The lipase is preferably immobilised. Typically, the reaction is carried out by passing the starting materials through a packed bed comprising immobilised lipase.
The process of the invention may comprise a further step of fractionation. However, it is an advantage of the process of the invention that it can be carried out to produce the product without subsequent fractionation.
The process may comprise a further step deacidification. Deacidification reduces the content of free fatty acids in the composition. Deacidification may be carried out by, for example, short path distillation.
One preferred process of the invention is a process for producing a glyceride composition having an oleic acid content of at least 65% by weight based on the total C12 to C20 fatty acids present in the glycerides, present as acyl groups, comprising reacting a fractionated oil or fat derived from shea oil, having an oleic acid content present as acyl groups of from 45 to 60% by weight based on the total C12 to C20 fatty acids present in the glycerides, with free oleic acid in the presence of a 1,3-specific lipase, wherein the fractionated oil or fat derived from shea oil is shea olein, wherein the glyceride composition comprises at least 75% by weight triglycerides and from 5 to 25% by weight diglycerides based on the total weight of the composition, and wherein the glyceride composition comprises at least 65% by weight of oleic acid and from 10 to 20% by weight of combined palmitic acid and stearic acid based on the total C12 to C20 fatty acids present in the glycerides, said oleic acid, stearic acid and palmitic acid being present as acyl groups in mono-, di- or tri- glycerides, wherein the weight ratio of palmitic acid to stearic acid present as acyl groups in the glycerides is at least 1:4, the content of stearic acid present as acyl groups in the glycerides is from 5 to 20 % by weight based on the total C12 to C20 fatty acids present in the glycerides, the content of palmitic acid present as acyl groups in the glycerides is from 1 to 6 % by weight based on the total C12 to C20 fatty acids present in the glycerides, the content of linolenic acids present as acyl groups in the glycerides is less than 0.5 % by weight based on the total C12 to C20 fatty acids present in the glycerides, the content of linoleic acid present as acyl groups in the glycerides is from 8 to 15 % by weight based on the total C12 to C20 fatty acids present in the glycerides, and the composition has an OOO content of from 25 to 70 % by weight based on total triglycerides, a SOO content of from 10 to 35 % by weight based on total triglycerides, an SOL content of from 1 to 20 % by weight based on total triglycerides and an SOS content of from 0.2 to 10 % by weight based on total triglycerides, where S represents C16 or C18 saturated fatty acids, L represents linoleic acid and O represents oleic acid.

The following non-limiting example illustrates the invention and does not limit its scope in any way. In the example and throughout this specification, all percentages, parts and ratios are by weight, unless indicated otherwise. Percentages of triglycerides, diglycerides, monoglycerides are based on the total weight of the composition. Percentages of fatty acids present as acyl groups in tri-, di- and mono- glycerides are based on the total C12 to C20 fatty acids present in the glycerides (including tri-, di- and mono- glycerides). Percentages of individual triglycerides (such as POO and POP) are based on total triglycerides present.

### Example

A feedstock of SHfiv64, a shea olein having an iodine value of 64 (40% by weight of the feedstock) was mixed with oleic acid (60% by weight of the feedstock) at 70°C. The reaction mixture was subjected to a 1,3 specific lipase (Lipase D, RM-C01-S2-d-081710-3) reaction at a moisture content of 0.10% by weight on the reaction mixture and an operation temperature of 70°C. The enzymatic reaction took place in a packed bed reactor. Nitrogen was bubbled through the feed and the reaction product. The enzymatic rearranged product was deacidified through a short path distillation device. No additional fractionation was required.
The product was analysed and the results are given in the following table.

| **Category** | | | **Product** |
|---|---|---|---|
| | | | **ei(SHf)** |
| **Materials** | **SHf** | **Oleic Acid** | **SHfiv84** |
| **Feedstock** | ***** | ***** | **40% SHf + 60% oleic acid** |
| **Remarks** | **Feed** | **PALMAC 770** | ***** |
| **Basic Analysis** | | | |
| **IV FAME** | 66.7 | 98.9 | 84.4 |
| **FFA (% oleic acid)** | 0.07 | * | 1.3 |
| **Cloud Point (°C)** | 8.5 | 0 | 0.0 |
| **Colour (5 1/4" cell) Red** | 4.9 | <1 | 8.3 |

| **FAME (%)** | | | |
|---|---|---|---|
| **C12** | 0.1 | 0.04 | * |
| **C14** | 0.1 | 0.03 | * |
| **C16:0** | 4.8 | 1.1 | 2.1 |
| **C18:0** | 29.1 | 2.1 | 10.9 |
| **C18:1 (t)** | 0.1 | 0.7 | 0.4 |
| **C18:1 (c)** | 55.8 | 82.8 | 73.1 |
| **C18:2 (t)** | 0.1 | 0.1 | 0.4 |
| **C18:2 (c)** | 8.4 | 12.3 | 11.9 |
| **C18:3 (t)** | * | * | 0.5 |
| **C18:3 (c)** | 0.3 | 0.4 | * |
| **C20** | 1.2 | 0.2 | 0.7 |
| **SAFA** | 35.3 | 3.47 | 13.7 |
| **MUFA** | 55.9 | 83.5 | 73.5 |
| **PUFA** | 8.8 | 12.8 | 12.8 |

| **SFC (Stabilised 16 hrs at 0°C)** | | | |
|---|---|---|---|
| **N0** | 42 | * | 8 |
| **N5** | 36 | * | 7 |
| **N10** | 21 | * | 3 |

| **Diglycerides (GC)** | | | |
|---|---|---|---|
| **SUM DAG (%)** | 8 | * | 9 |

| **SILVER PHASE (%)** | | | |
|---|---|---|---|
| **SSS** | 10.1 | * | 0.0 |
| **SOS** | 1.6 | * | 0.6 |
| **SSO** | 4.4 | * | 0.4 |
| **SLS** | 0.4 | * | 0.1 |
| **SSL** | 0.5 | * | 0.0 |
| **SOO** | 61.0 | * | 14.8 |
| **OSO** | 0.5 | * | 1.4 |
| **SOL** | 8.1 | * | 2.9 |
| **OOO** | 10.1 | * | 59.3 |
| **TOTAL TG%** | 100.0 | * | 100.0 |
| **Cloud Point (0 °C)** | 8.5 | * | -0.2 |

## Claims

1. Glyceride composition obtainable from shea olein comprising at least 75 % by weight triglycerides and from 5 to 25 % by weight diglycerides based on the total weight of the composition, and having an oleic acid content of at least 65 % by weight based on the total C12 to C20 fatty acids present in the glycerides and a combined stearic acid plus palmitic acid content of from 10 to 20 % by weight based on the total C12 to C20 fatty acids present in the glycerides, said oleic acid, stearic acid and palmitic acid being present as acyl groups in mono-, di- or tri- glycerides.

2. Glyceride composition as claimed in Claim 1, wherein the stearic acid to palmitic acid weight ratio is greater than 2.5, preferably greater than 4.

3. Glyceride composition as claimed in Claim 1 or Claim 2 having an OOO content of from 25 to 70 % by weight, a SOO content of from 10 to 35 % by weight, an SOL content of from 1 to 20 % by weight and an SOS content of from 0.2 to 10 % by weight, where S represents C16 or C18 saturated fatty acids, L represents linoleic acid and O represents oleic acid and the percentages are based on total triglycerides.

4. Glyceride composition as claimed in any one of the preceding claims, having an oleic acid content of at least 70 % by weight based on the total C12 to C20 fatty acids present in the glycerides.

5. Glyceride composition as claimed in any one of the preceding claims, having a cloud point of less than 0 °C.

6. Process for producing a glyceride composition having an oleic acid content of at least 65% by weight based on the total C12 to C20 fatty acids present in the glycerides comprising reacting a fractionated oil or fat derived from shea oil, having an oleic acid content present as acyl groups of from 45 to 60% by weight based on the total C12 to C20 fatty acids present as glycerides, with free oleic acid in the presence of a 1,3-specific lipase, wherein the fractionated oil or fat derived from shea oil is shea olein.

7. Process as claimed in Claim 6, wherein the reaction of the fractionated oil or fat with oleic acid is carried out at a temperature of above 30 °C.

8. Process as claimed in Claim 6 or Claim 7, wherein the reaction of the fractionated oil or fat with oleic acid is carried out at a temperature in the range of from 65 °C to 80 °C.

9. Process as claimed in any one of Claims 6 to 8, wherein the reaction of the fractionated oil or fat with oleic acid is carried out in the presence of from 0.01 to 0.5 % by weight of water.

10. Process as claimed in any one of Claims 6 to 9, wherein the weight ratio of the fractionated oil or fat to oleic acid is less than 1:1.

11. Process as claimed in any one of Claims 6 to 10, wherein the weight ratio of the fractionated oil or fat to oleic acid is in the range of from 1:1 to 1:3.

12. Process as claimed in any one of Claims 6 to 11, wherein the lipase is from *Rhizopus oryzae.*

13. Use of a glyceride composition as claimed in any one of Claims 1 to 5 as an edible oil in a food product or in the preparation thereof.

## Patentansprüche

1. Glyceridzusammensetzung, erhaltbar aus Shea-Olein, umfassend mindestens 75 Gew.-% Triglyceride und von 5 bis 25 Gew.-% Diglyceride, basierend auf dem Gesamtgewicht der Zusammensetzung, und mit einem Oleinsäuregehalt von mindestens 65 Gew.-%, basierend auf den gesamten C12- bis C20-Fettsäuren, die in den Glyceriden vorhanden sind, und einem kombinierten Stearinsäure- plus Palmitinsäuregehalt von 10 bis 20 Gew.-%, basierend auf den gesamten C12- bis C20-Fettsäuren, die in den Glyceriden vorhanden sind, wobei die Oleinsäure, Stearinsäure und Palmitinsäure als Acylgruppen in Mono-, Di- oder Triglyceriden vorhanden sind.

2. Glyceridzusammensetzung nach Anspruch 1, wobei das Gewichtsverhältnis von Stearinsäure zu Palmitinsäure größer als 2,5 ist, vorzugsweise größer als 4.

3. Glyceridzusammensetzung nach Anspruch 1 oder Anspruch 2 mit einem OOO-Gehalt von 25 bis 70 Gew.-%, einem SOO-Gehalt von 10 bis 35 Gew.-%, einem SOL-Gehalt von 1 bis 20 Gew.-% und einem SOS-Gehalt von 0,2 bis 10 Gew.-%, wobei S gesättigte C16- oder C18-Fettsäuren darstellt, L Linolsäure darstellt und O Oleinsäure darstellt und die Prozentangaben auf Gesamttriglyceriden basieren.

4. Glyceridzusammensetzung nach einem der vorhergehenden Ansprüche mit einem Oleinsäuregehalt von mindestens 70 Gew.-%, basierend auf den gesamten C12- bis C 20-Fettsäuren, die in den Glyceriden vorhanden sind.

5. Glyceridzusammensetzung nach einem der vorhergehenden Ansprüche mit einem Trübungspunkt unter 0 °C.

6. Verfahren zum Herstellen einer Glyceridzusammensetzung mit einem Oleinsäuregehalt von mindestens 65 Gew.-%, basierend auf den gesamten C12- bis C 20-Fettsäuren, die in den Glyceriden vorhanden sind, umfassend das Umsetzen eines fraktionierten Öls oder Fetts, das von Sheaöl abstammt, mit einem als Acylgruppen vorhandenen Oleinsäuregehalt von 45 bis 60 Gew.-%, basierend auf den gesamten C12- bis C 20-Fettsäuren, die in den Glyceriden vorhanden sind, mit freier Oleinsäure in Gegenwart einer 1,3-spezifischen Lipase, wobei das von Sheaöl abstammende fraktionierte Öl oder Fett Shea-Olein ist.

7. Verfahren nach Anspruch 6, wobei die Umsetzung des fraktionierten Öls oder Fetts mit Oleinsäure bei einer Temperatur von mehr als 30 °C durchgeführt wird.

8. Verfahren nach Anspruch 6 oder Anspruch 7, wobei die Umsetzung des fraktionierten Öls oder Fetts mit Oleinsäure bei einer Temperatur im Bereich von 65 °C bis 80 °C durchgeführt wird.

9. Verfahren nach einem der Ansprüche 6 bis 8, wobei die Umsetzung des fraktionierten Öls oder Fetts mit Oleinsäure in Gegenwart von 0,01 bis 0,5 Gew.-% Wasser durchgeführt wird.

10. Verfahren nach einem der Ansprüche 6 bis 9, wobei das Gewichtsverhältnis des fraktionierten Öls oder Fetts zu Oleinsäure weniger als 1:1 beträgt.

11. Verfahren nach einem der Ansprüche 6 bis 10, wobei das Gewichtsverhältnis des fraktionierten Öls oder Fetts zu Oleinsäure im Bereich von 1:1 bis 1:3 liegt.

12. Verfahren nach einem der Ansprüche 6 bis 11, wobei die Lipase von *Rhizopus oryzae* stammt.

13. Verwendung einer Glyceridzusammensetzung nach einem der Ansprüche 1 bis 5 als Speiseöl in einem Nahrungsmittelprodukt oder bei der Herstellung desselben.

## Revendications

1. Composition glycéridique pouvant être obtenue à partir d'oléine de karité, comprenant au moins 75 % en poids de triglycérides et de 5 à 25 % en poids de diglycérides sur la base du poids total de la composition, et ayant une teneur en acide oléique d'au moins 65 % en poids sur la base des acides gras en C12 à C20 totaux présents dans les glycérides et une teneur combinée en acide stéarique et en acide palmitique de 10 à 20 % en poids sur la base des acides gras en C12 à C20 totaux présents dans les glycérides, ledit acide oléique, ledit acide stéarique et ledit acide palmitique étant présents sous forme de groupes acyles dans les mono-, di- ou triglycérides.

2. Composition glycéridique selon la revendication 1, dans laquelle le rapport en poids de l'acide stéarique à l'acide palmitique est supérieur à 2,5, de préférence supérieur à 4.

3. Composition glycéridique selon la revendication 1 ou 2, ayant une teneur en OOO de 25 à 70 % en poids, une teneur en SOO de 10 à 35 % en poids, une teneur en SOL de 1 à 20 % en poids et une teneur en SOS de 0,2 à 10 % en poids, où S représente les acides gras saturés en C16 ou C18, L représente l'acide linoléique et O représente l'acide oléique et les pourcentages sont basés sur les triglycérides totaux.

4. Composition glycéridique selon l'une quelconque des revendications précédentes, ayant une teneur en acide oléique d'au moins 70 % en poids sur la base des acides gras en C12 à C20 totaux présents dans les glycérides.

5. Composition glycéridique selon l'une quelconque des revendications précédentes, ayant un point de trouble inférieur à 0 °C.

6. Procédé de production d'une composition glycéridique ayant une teneur en acide oléique d'au moins 65 % en poids sur la base des acides gras en C12 à C20 totaux présents dans les glycérides, comprenant la mise en réaction d'une huile ou matière grasse fractionnée provenant de l'huile de karité, ayant une teneur en acide oléique présente sous forme de groupe acyles de 45 à 60 % en poids sur la base des acides gras en C12 à C20 totaux présents sous forme de glycérides, avec de l'acide oléique libre en présence d'une lipase 1,3-spécifique, où l'huile ou la matière grasse fractionnée provenant de l'huile de karité est l'oléine de karité.

7. Procédé selon la revendication 6, dans lequel la réaction de l'huile ou de la matière grasse fractionnée avec l'acide oléique est effectuée à une température supérieure à 30 °C.

8. Procédé selon la revendication 6 ou 7, dans lequel la réaction de l'huile ou de la matière grasse fractionnée avec l'acide oléique est effectuée à une température comprise entre 65 °C et 80 °C.

9. Procédé selon l'une quelconque des revendications 6 à 8, dans lequel la réaction de l'huile ou de la matière grasse fractionnée avec l'acide oléique est effectuée en présence de 0,01 à 0,5 % en poids d'eau.

10. Procédé selon l'une quelconque des revendications 6 à 9, dans lequel le rapport en poids de l'huile ou de la matière grasse fractionnée à l'acide oléique est inférieur à 1:1.

11. Procédé selon l'une quelconque des revendications 6 à 10, dans lequel le rapport en poids de l'huile ou de la matière grasse fractionnée à l'acide oléique est compris entre 1:1 et 1:3.

12. Procédé selon l'une quelconque des revendications 6 à 11, dans lequel la lipase provient de *Rhizopus oryzae.*

13. Utilisation d'une composition glycéridique selon l'une quelconque des revendications 1 à 5 sous forme d'huile alimentaire dans un produit alimentaire ou dans la préparation de celle-ci.
